# EUROPEAN PATENT SPECIFICATION

(11) **EP 4 568 258 B1**
(45) Date of publication and mention of the grant of the patent: **14.10.2026**
(21) Application number: 23872758.0
(22) Date of filing: 01.08.2023
(51) Int. Cl.: H04N 21/422, H04N 21/426, H04N 21/41, H04N 21/436, H04N 21/485

(54) **DISPLAY DEVICE CONTROLLED BY REMOTE CONTROLLER AND CONTROL METHOD THEREOF**
DURCH EINE FERNSTEUERUNG GESTEUERTE ANZEIGEVORRICHTUNG UND STEUERUNGSVERFAHREN DAFÜR
DISPOSITIF D'AFFICHAGE COMMANDÉ PAR UN DISPOSITIF DE COMMANDE À DISTANCE ET SON PROCÉDÉ DE COMMANDE

(30) Priority: 28.09.2022 KR 20220123254
(43) Date of publication of application: 11.06.2025
(73) Proprietor: LG Electronics Inc., Yeongdeungpo-gu Seoul 07336 (KR)
(72) Inventor: YU, Seonil, Seoul 06772 (KR); AHN, Sangjin, Seoul 06772 (KR); LEE, Janghee, Seoul 06772 (KR)
(74) Representative: Vossius & Partner Patentanwälte Rechtsanwälte mbB
(86) International application number: PCT/KR2023/011236
(87) International publication number: WO 2024/071634

(56) References cited:
- CN-A- 103 686 276
- CN-A- 107 835 447
- CN-A- 114 679 615
- CN-B- 112 202 649
- JP-A- H10 155 188
- KR-A- 20040 081 776
- KR-A- 20110 012 256
- KR-A- 20130 110 411
- KR-A- 20150 028 501
- KR-A- 20220 070 211
- US-A1- 2005 280 551

## Description

### TECHNICAL FIELD

The present disclosure relates to various multimedia devices (for example, TVs, etc.) controlled by a remote control. In particular, the present disclosure is applicable to any type of device that transmits and receives a remote control IR signal using a custom code.

### BACKGROUND ART

Due to the coronavirus pandemic, new working styles, such as working from home, have become prevalent. As such, the number of TVs present in homes has been increasing.

A TV may be installed in each room and used. However, a portable TV, such as the recently released StandbyMe, may be installed around a living room TV.

Meanwhile, a remote control included in a product sold by a manufacturer is designed to output a specific custom code so that only a device of the manufacturer is recognizable. Relatedly, patent document CN 114 679 615 A discloses techniques for dynamic pairing of a remote controller and a television device. More particularly, CN 114 679 615 A discloses a method of controlling a display device controlled by a remote controller comprising displaying an option for activating a multi-remote control setting.

However, when the same custom code is used, this may cause malfunctions in devices of the same manufacturer. For example, when a power key of a remote control is pressed to turn on a TV sold by Company L, there may be a problem in that another TV or monitor sold by Company L is turned off at the same time as the TV is turned on.

Naturally, the recent remote control linkage methods for TVs and STBs are designed based on, for example, the Bluetooth protocol (however, in the case of mid- to low-priced TV remote controls, the traditional IR (infrared) protocol-based remote controls are still used). However, even in the case of remote controls that support Bluetooth pairing, all buttons operate in IR mode before pairing with the TV, and even after pairing, the power button operates in IR mode.

Therefore, when any type of remote control is a product of the same company, there is a problem that a plurality of devices is unintentionally controlled together by transmitting the same custom code.

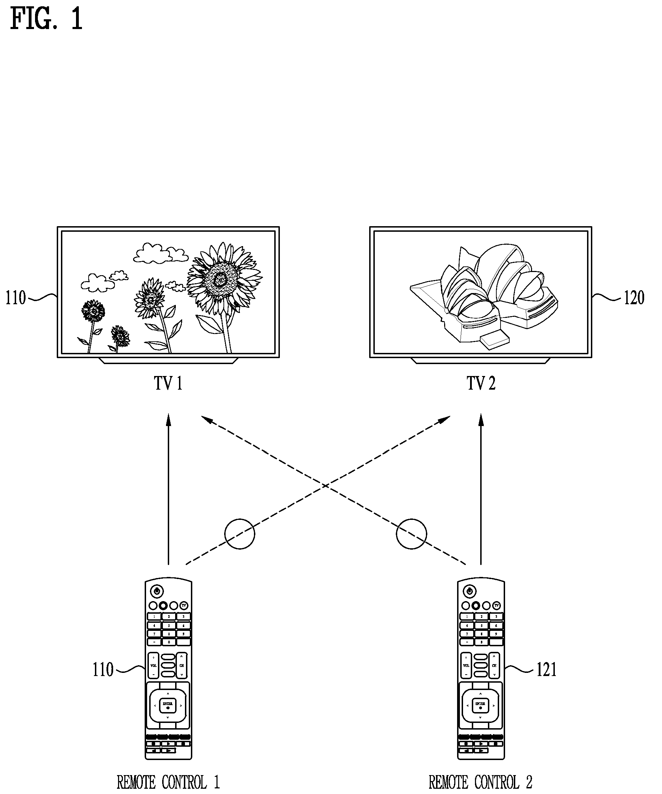

FIG. 1 is a drawing for describing a problem in that one remote control unintentionally controls a plurality of devices according to conventional technology.

The term custom code used in this specification is a command code for distinguishing, for example, a specific company or product. More specifically, for example, a TV remote control of a specific company is designed to transmit an IR infrared signal by carrying a custom code of (0x04, 0xFB) or "04FB."

Since the custom code set in this way does not change, and the IR infrared signal may be transmitted to an unspecified number of devices due to characteristics thereof, a problem occurs where products of the same manufacturer in close proximity are unintentionally simultaneously controlled.

For example, as illustrated in FIG. 1, it is assumed that a first TV 110 and a second TV 120 of the same manufacturer are installed in close proximity.

In this instance, when any button is pressed while a first remote control 111 corresponding to the first TV 110 is directed toward the first TV 110, there is a problem that both the first TV 110 and the second TV 120 react in the same way.

On the contrary, when any button is pressed while a second remote control 121 corresponding to the second TV 120 is directed toward the second TV 120, there is a problem that both the first TV 110 and the second TV 120 react in the same way.

In particular, in the case of a remote control having a Bluetooth function, a power key is designed to operate using IR. For example, when the TV is on, RF such as Bluetooth is used for operation. However, when the TV is off, a BT Bluetooth module is off, and thus the TV may be turned on using only an IR infrared signal of the remote control.

As a result, it is reported that various problems as follows are actually occurring in households.

For example, when TVs of the same manufacturer are installed in a living room and a bedroom, respectively, and a user presses a button on a remote control to control only the TV installed in the bedroom, not only the TV installed in the bedroom but also the TV installed in the living room may react in the same way. In particular, the problem more frequently occurs as a distance between two devices decreases.

### DISCLOSURE

### TECHNICAL TASK

The present disclosure seeks to solve the aforementioned problem, and particularly proposes a system capable of separately managing a plurality of adjacent identical product groups (for example, sold by the same manufacturer) by changing a custom code.

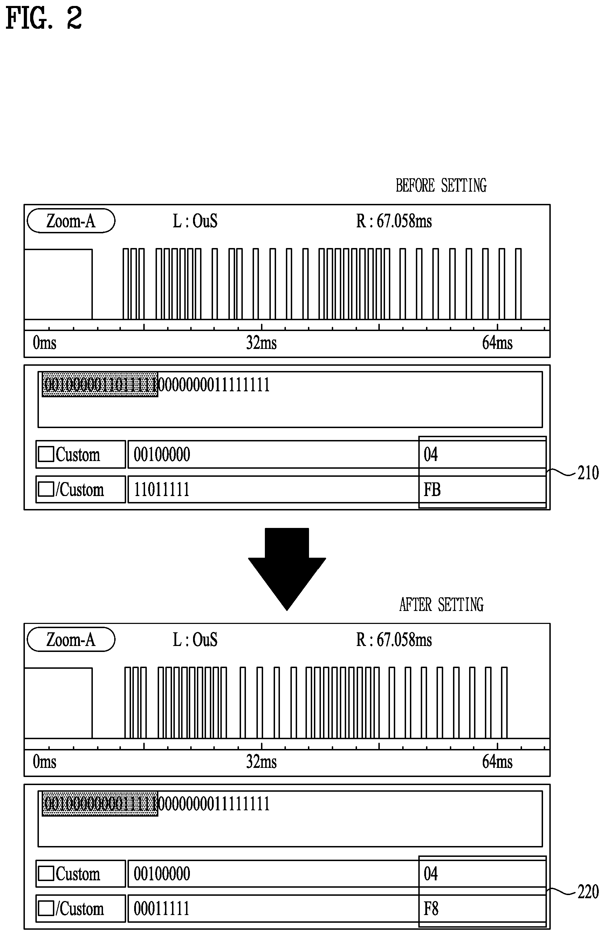

According to one embodiment of the present disclosure, a situation where an advertising message is transmitted so that a plurality of adjacent devices recognizes each other is assumed, and a process of changing a custom code at this time will be described later with reference to FIGs. 2 to 4.

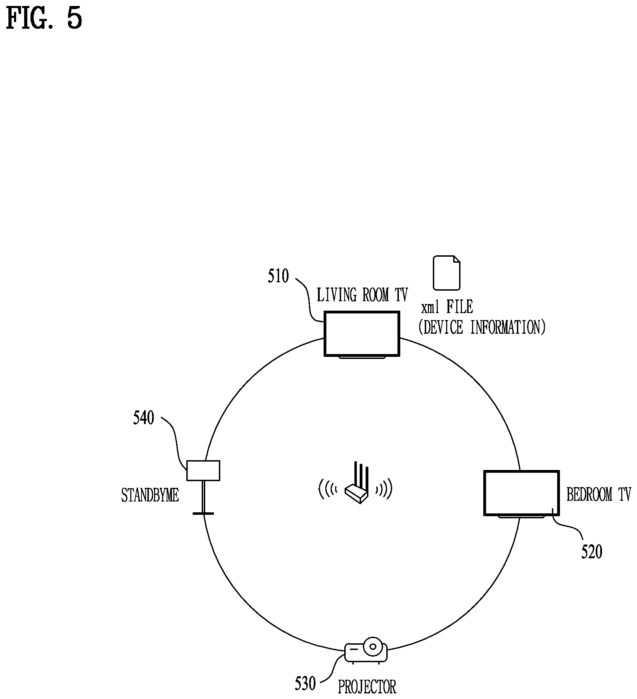

Meanwhile, according to another embodiment of the present disclosure, it is assumed that a plurality of devices is previously connected to the same network, and a process of changing a custom code at this time will be described later with reference to FIGs. 5 to 8.

Naturally, implementation of another embodiment with reference to the entire specification by those skilled in the art is within the scope of the present disclosure.

### TECHNICAL SOLUTIONS

A method of controlling a display device controlled by a remote controller according to an embodiment of the present disclosure includes performing a scan operation to recognize whether at least one external device is present nearby, receiving device information from the at least one external device, displaying an option for changing a custom code of the remote controller, setting a changed custom code according to selection of the option, and transmitting the changed custom code to the remote controller.

For example, the displaying may include displaying the option for changing the custom code of the remote controller exclusively when a custom code of the received device information is the same as a custom code of the display device.

For example, the device information may include at least one of first information for identifying a manufacturer or second information for identifying a device type.

A display device controlled by a remote controller according to an embodiment of the present disclosure includes a network interface configured to perform a scan operation to recognize whether at least one external device is present nearby and to receive device information from the at least one external device, a display configured to display an option for changing a custom code of the remote controller, and a controller configured to set a changed custom code according to selection of the option. In particular, the controller controls the network interface so that the changed custom code is transmitted to the remote controller.

A method of controlling a display device controlled by a remote controller according to another embodiment of the present disclosure includes displaying an option for activating multi-remote control automatic setting, receiving device information from at least one external device connected to the same network when the option is selected, and transmitting a changed custom code to an external device of a specific group having the same custom code as a custom code of the display device according to the received device information.

For example, custom codes of respective external devices belonging to the specific group may be all different from each other.

For example, the display device may have a MAC address lower than a MAC address of the at least one external device connected to the same network.

A display device controlled by a remote controller according to another embodiment of the present disclosure includes a display configured to display an option for activating multi-remote control automatic setting, a network interface configured to receive device information from at least one external device connected to the same network when the option is selected, and a controller.

In particular, the controller controls the network interface so that a changed custom code is transmitted to an external device of a specific group having the same custom code as a custom code of the display device according to the received device information.

### ADVANTAGEOUS EFFECTS

According to the present disclosure, there is a technical effect that allows for separate control of two or more products of the same manufacturer even when the products are adjacent to each other by adaptively changing a custom code according to a situation rather than using a conventional fixed custom code.

Further scope of applicability of the present disclosure will become apparent from the detailed description below.

### DESCRIPTION OF DRAWINGS

FIG. 1 is a drawing for describing a problem in that one remote control unintentionally controls a plurality of devices according to conventional technology;
FIG. 2 is a diagram for describing a changed custom code only for a specific device and a corresponding remote control according to an embodiment of the present disclosure;
FIG. 3 is a flowchart illustrating an overall process of changing a custom code for a specific device and a corresponding remote control according to an embodiment of the present disclosure;
FIG. 4 is a drawing for further describing step S302 illustrated in FIG. 3;
FIG. 5 illustrates a case in which a plurality of devices is connected to one and the same network according to another embodiment of the present disclosure;
FIG. 6 is a flowchart illustrating an overall process of changing a custom code for a specific device and a corresponding remote control in a situation illustrated in FIG. 5;
FIG. 7 is a drawing for more specifically describing a MAC address illustrated in FIG. 6;
FIG. 8 is a drawing for more specifically describing a multi-remote control automatic setting function illustrated in FIG. 6; and
FIG. 9 is a block diagram illustrating constituent elements of a display device 100 according to an embodiment of the present disclosure.

### BEST MODE FOR DISCLOSURE

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

FIG. 2 is a diagram for describing a changed custom code only for a specific device and a corresponding remote control according to an embodiment of the present disclosure.

As described above, according to the conventional technology, a custom code of a remote control is fixed to, for example, 04FB (210) and is not changed at all after sale. Therefore, there has been a problem in that two adjacent identical products (for example, a TV of Company L and a TV of Company A or a TV of Company S, etc.) all respond to a remote control signal.

To address this problem, one embodiment of the present disclosure is to design the remote control so that, in certain circumstances, the custom code is changed from the default value to a different value, for example, 04F8 (220).

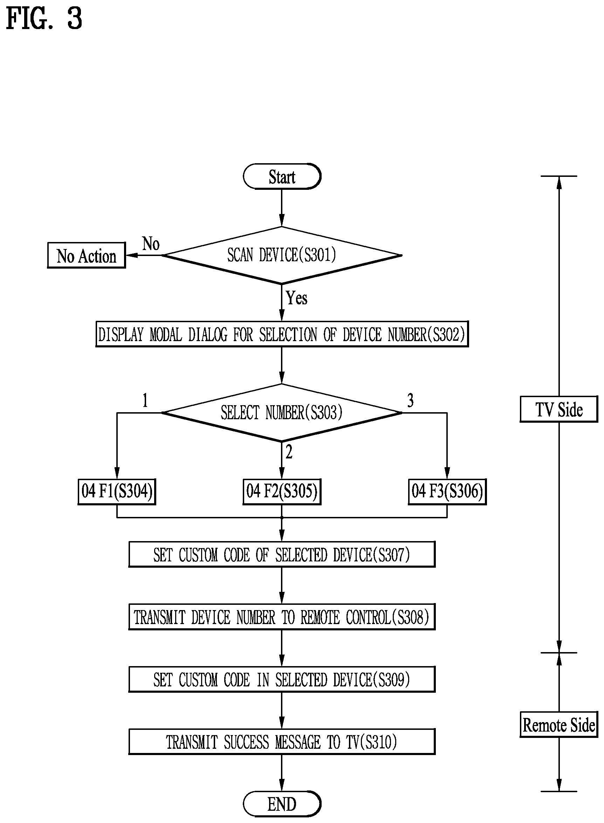

However, an overall process related thereto will be described in more detail later with reference to FIG. 3.

FIG. 3 is a flowchart illustrating an overall process of changing a custom code for a specific device and a corresponding remote control according to an embodiment of the present disclosure. Even though FIG. 3 assumes and describes the case where the present disclosure is applied to a TV, the present disclosure is applicable to other multimedia devices other than TVs.

First, a display device (for example, a TV) according to an embodiment of the present disclosure performs a scan operation to recognize whether at least one external device is present nearby (S301). The display device receives device information from the at least one external device. The device information includes, for example, at least one of first information for identifying a manufacturer or second information for identifying a device type. Any device information may be used as long as the device information is information that allows comparison or derivation of a custom code.

Furthermore, the display device displays an option for changing the custom code of the remote controller (S302). However, the display step (S302) does not always operate, and by activating step S302 only when a custom code of the received device information and a custom code of the display device are the same, there is a technical effect of preventing unnecessary graphic images from being generated. In addition, the design takes into account that there is no need to change the custom code when custom codes of adjacent external devices are different (that is, for example, TVs from different manufacturers) since the TVs from different manufacturers do not react in the same way to operation of a remote control button even when the TVs from different manufacturers are adjacent to each other.

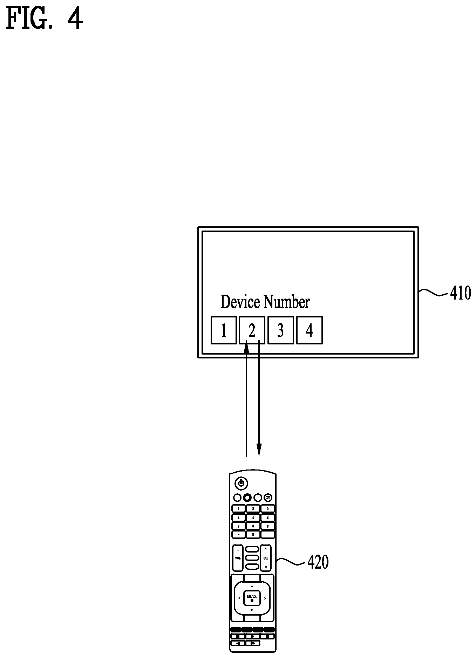

When any number is selected from options displayed on a TV screen (S303), for example, in response to selecting number 1, a new custom code 04F1 is generated (S304). Meanwhile, in response to selecting number 2, a new custom code 04F2 is generated (S305), and in response to selecting number 3, a new custom code 04F3 is generated (S306). This will be described in more detail later with reference to FIG. 4.

A display device (for example, a TV) according to an embodiment of the present disclosure is designed to set a changed custom code (S307) depending on the selection of the options (S303 to S306).

Furthermore, the display device (for example, the TV) according to the embodiment of the present disclosure transmits the changed custom code to the remote control (S308).

Meanwhile, the remote control stores the custom code received from the TV in a memory thereof (S309) and uses the custom code as a new custom code when transmitting an IR signal later. Therefore, there is a technical effect that the problem of interference does not occur even when TVs of the same make and model are placed adjacent to each other.

Finally, the remote control transmits a success message back to the TV (S310), thereby completing the entire process. It is obvious that the present disclosure may be implemented by including only some of the steps illustrated in FIG. 3. The scope of rights should, in principle, be determined according to the matters described in the patent claims.

FIG. 4 is a drawing for further describing step S302 illustrated in FIG. 3.

As illustrated in FIG. 4, when there are devices having the same custom code around a TV 410 according to an embodiment of the present disclosure, options for distinguishing the devices by device number are displayed.

In this instance, when a specific device number is selected via a remote control 420, a new custom code mapped to the number is transmitted from the TV 410 to the remote control 420, and the TV 410 is set to respond to the new custom code.

The embodiment of the present disclosure described above with reference to FIGs. 2 to 4 is summarized again as follows.

The TV according to the embodiment of the present disclosure checks whether there is a product (TV) of the same manufacturer around the product through a periodic scan. In this instance, when applied to an LG TV, the LG TV is designed to advertise a message [LG] webOS TV xxxxx.

When a TV product of the same manufacturer is not found, the TV according to the embodiment of the present disclosure maintains the existing default custom code, whereas when a TV product of the same maker is found (for example, the message [LG] webOS TV xxxxx is scanned), a modal dialog for changing the custom code is displayed (see the previous FIG. 4).

Then, as the TV according to the embodiment of the present disclosure searches for a TV product of the same manufacturer, a message is displayed on the TV screen to indicate that inconvenience may occur due to interference when the same custom code is used.

For example, when a number UI is selected on the TV screen, the TV changes the controller (MICOM) so that the corresponding custom code may be recognized, and transmits a command to the remote control to set the custom code.

The remote control sets the custom code according to the received command, saves content thereof, and then transmits a notification indicating that the content has been normally saved to the TV using RF (for example, Bluetooth, etc.).

Therefore, through this process, there is a technical effect of fundamentally solving a problem in that, when the corresponding remote control and the custom code of the TV are matched 1:1, and there are several TVs in close proximity, a plurality of TVs, etc. operate at the same time in response to an operation of a remote control button.

However, one embodiment of the present disclosure described above with reference to FIGs. 2 to 4 is a method of selecting and assigning a custom code through a remote control, etc., and another process of automatically setting a custom code will be described later in more detail with reference to FIGs. 5 to 8 (another embodiment of the present disclosure).

FIG. 5 illustrates a case in which a plurality of devices is connected to one and the same network according to another embodiment of the present disclosure.

Unlike the embodiment of the present disclosure previously described with reference to FIGs. 2 to 4, FIG. 5 assumes a situation where the devices are connected to one and the same network. For example, the devices may all be connected to in-house Wi-Fi, or may all be connected to a cloud server.

For example, as shown in FIG. 5, a living room TV 510 is connected to the same network (for example, Wi-Fi, etc.) as that of a bedroom TV 520, a standbyme 540, and a projector 530. Here, the standbyme 540 is a movable TV, which may have wheels installed at a bottom of a stand connected to a screen or may have a form in which a screen is inserted into a bag.

In this instance, the living room TV receives device information from the bedroom TV 520, the standbyme 540, and the projector 530 connected to the same network.

Here, the device information may be, for example, in xml file format, and includes a MAC address, an infrared custom IR code, etc. of each device.

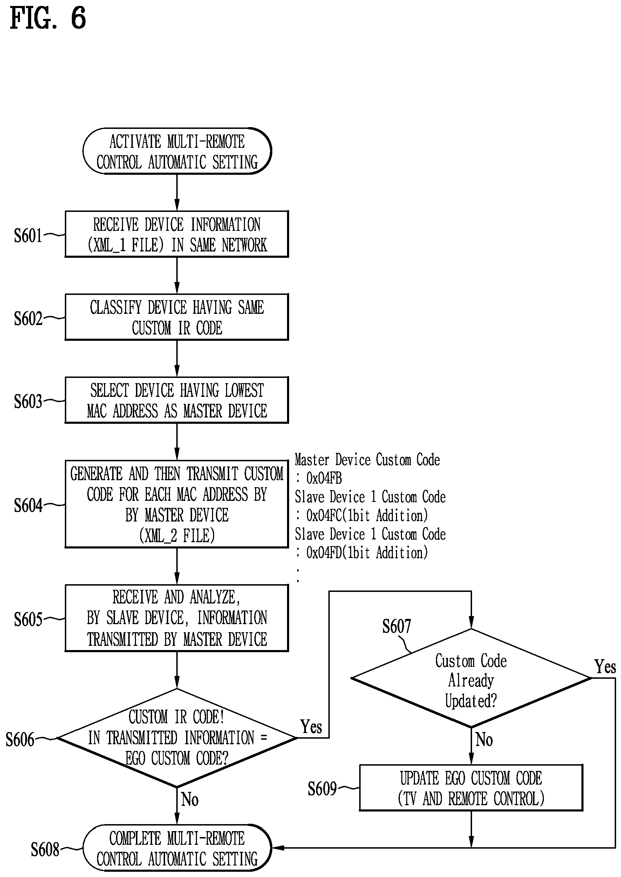

Therefore, it is possible to automatically change the custom code of each device depending on whether the custom code included in the device information matches, which will be described in more detail in FIG. 6 below.

FIG. 6 is a flowchart illustrating an overall process of changing a custom code for a specific device and a corresponding remote control in the situation illustrated in FIG. 5.

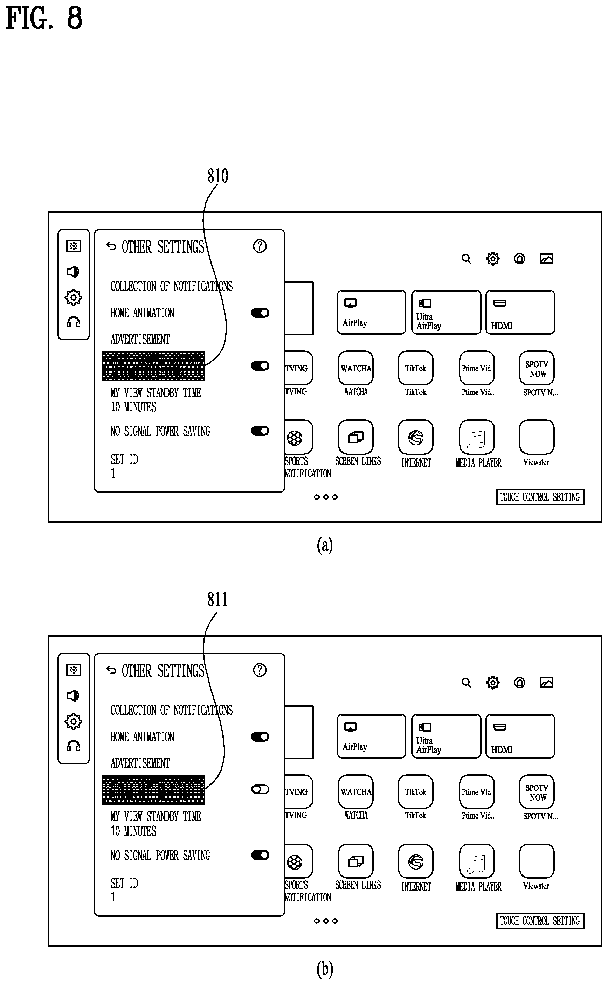

It is assumed that a display device (for example, a TV) according to another embodiment of the present disclosure has first activated multi-remote control automatic setting, which will be described in more detail later with reference to FIG. 8.

As shown in FIG. 8(a), when an option is selected, the display device (for example, the TV) according to the other embodiment of the present disclosure receives device information from at least one external device connected to the same network (S601).

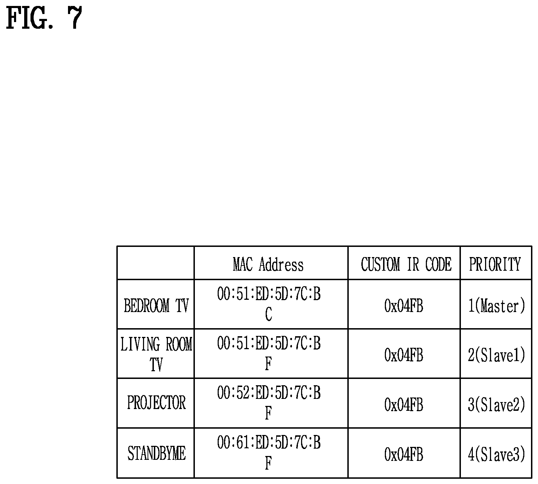

The display device (for example, the TV) according to the other embodiment of the present disclosure classifies a device having the same custom code based on the received device information (S602), and selects a device having a lowest MAC address as a master device (S603), which will be described in more detail later with reference to FIG. 7. Here, it is assumed that the TV installed in the living room is selected as a master device.

Furthermore, the TV transmits a changed custom code to an external device of a specific group having the same custom code as that of the TV based on the received device information. That is, the TV generates a custom code for each MAC address and transmits the custom code to each device. The device that generates the changed custom code may be referred to as a master device, and the device that receives the changed custom code may be referred to a slave device.

The slave device (excluding the TV installed in the living room) receives the custom code from the TV installed in the living room (master device) and analyzes the custom code (S605).

It is determined whether the custom code of the master device and the custom code transmitted to the slave device are the same (S606).

When the custom codes are not the same as a result of determination (S606), the multi-remote control automatic setting is completed (S608). Since the custom code is different for each device, no separate additional setting is required.

On the other hand, when the custom codes are the same as a result of determination (S606), each slave device determines whether the custom code has already been updated (S607).

When the custom code is not updated as a result of determination (S607), the custom code of the slave device and the corresponding remote control is updated (S609).

When such a design is adopted, there is a technical effect that custom codes of all devices (same product group manufactured by the same manufacturer, for example, TVs of Company L) may be automatically set differently.

FIG. 7 is a drawing for more specifically describing the MAC address illustrated in FIG. 6.

It is assumed that the bedroom TV, the living room TV, the projector, and the standbyme illustrated in FIG. 7 are all connected to the same network (see FIG. 5 above). Furthermore, since the devices are all made by the same manufacturer, custom IR codes are all set to the same value. Therefore, there is a problem that, when a specific device is intended to be adjusted using one remote control, other peripheral devices are unintentionally controlled.

In this instance, based on the MAC address, a device having the smallest value is set to be the master device. Then, the remaining devices that receive a custom IR code newly generated by the master device become slave devices.

Furthermore, the living room TV, which is the master device, is designed to have different custom IR code values by adding, for example, a 1-bit value to custom codes according to the order of the MAC address values of the respective slave devices.

Therefore, the master device transmits a changed custom code to each slave device so that a first slave device has a custom code of 0x04FC, a second slave device has a custom code of 0x04FD, and a third slave device has a custom code of 0x04FE.

FIG. 8 is a drawing for more specifically describing a multi-remote control automatic setting function illustrated in FIG. 6.

As mentioned above, according to another embodiment of the present disclosure, it is possible to automatically set a different custom code for each device.

However, depending on the user or situation, there is a possibility that it is desired to control a plurality of devices at once using one remote control. FIG. 8 is a design that takes this into consideration.

For example, as shown in FIG. 8(a), when a multi-remote control automatic setting option is set to an activated state (810), as described above, all devices connected to the network have different custom codes. Accordingly, all devices and remote controls are automatically mapped 1:1, and when a remote control button of the living room TV is authorized, other TVs (of the same manufacturer) do not respond at all.

On the other hand, as shown in FIG. 8(b), when the multi-remote control automatic setting option is set to a deactivated state (811), a process of changing a custom code for a device of the same manufacturer is not performed. Therefore, if necessary, the user has an advantage of being able to simultaneously control peripheral devices by pushing a button on one remote control.

That is, the other embodiment of the present disclosure described above with reference to FIGs. 5 to 8 is summarized and described as follows.

First, in the design, device information (XML file) transmitted by the SSDP protocol and custom code information of the IR protocol of the corresponding product are transmitted.

Then, when there are products of the same manufacturer having the same custom code in the same network, the master device generates new non-duplicated custom codes, the number of which is equal to the number of devices in the network, through bit addition based on a custom code thereof, and then transmits the custom codes to the respective slave devices.

In addition, the slave devices are designed to update the custom codes of both the device and the remote control according to the custom code assigned thereto (for example, Flash Memory Write).

Meanwhile, when a new device is added, the master device issues a new custom code only to the new device, excluding a device whose custom code has been updated, and induces an update.

Furthermore, according to the other embodiment of the present disclosure, as shown in FIG. 8(a), there is a technological effect that, by adding a "multi-remote control automatic setting" menu, when the menu is activated, devices having the same custom IR code present in the same network have unique custom codes, respectively, thereby eliminating inconvenience of a plurality of products simultaneously operating.

On the other hand, when it is desired to control a plurality of TVs using one remote control, the "multi-remote control automatic setting" menu is deactivated (see FIG. 8(b)).

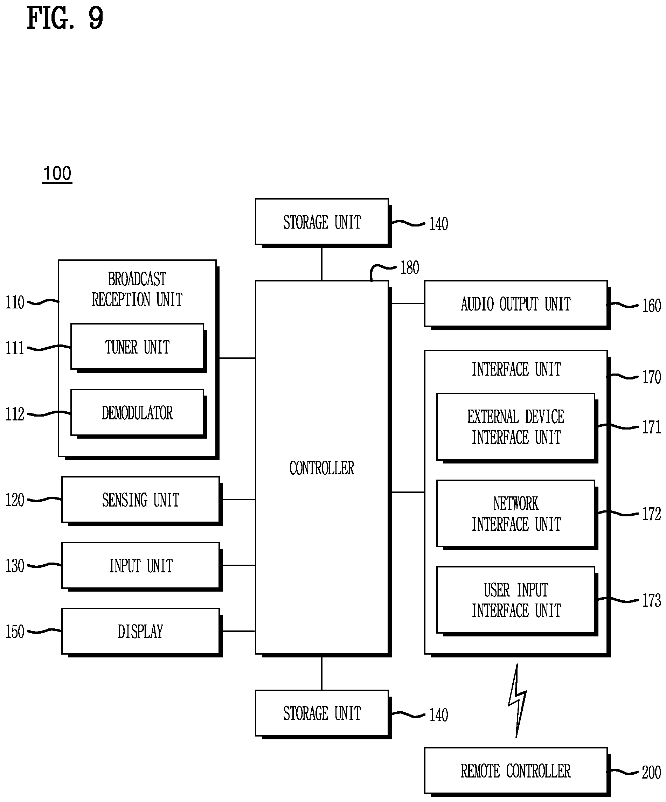

FIG. 9 is a block diagram illustrating constituent elements of a display device 100 according to an embodiment of the present disclosure.

Referring to FIG. 1, the display device 100 may include a broadcast reception unit 110, an external device interface unit 171, a network interface unit 172, a storage unit 140, a user input interface unit 173, an input unit 130, a controller 180, a display 150, an audio output unit 160, and/or a power-supply unit 190.

The broadcast reception unit 110 may include a tuner unit 111 and a demodulator 112.

Although not shown in the drawings, the display device 100 may include only the external device interface unit 171 and the network interface 172 from among the broadcast reception unit 110, the external device interface unit 171, and the network interface unit 172. That is, the display device 100 may not include the broadcast reception unit 110.

The tuner unit 111 may select a broadcast signal corresponding to either a user-selected channel or all prestored channels from among broadcast signals received through an antenna (not shown) or a cable (not shown). The tuner unit 111 may convert the selected broadcast signal into an intermediate frequency (IF) signal or a baseband image or a voice signal.

For example, when the selected broadcast signal is a digital broadcast signal, the tuner unit 111 may convert the selected broadcast signal into a digital IF (DIF) signal. When the selected broadcast signal is an analog broadcast signal, the tuner unit 111 may convert the selected broadcast signal into an analog baseband image or a voice signal (CVBS/SIF). That is, the tuner unit 111 may process the digital broadcast signal or the analog broadcast signal. The analog baseband image or the voice signal (CVBS/SIF) output from the tuner unit 111 may be directly input to the controller 180.

The tuner unit 111 may sequentially select broadcasting signals of all broadcasting channels stored through a channel memory function from among the received broadcast signals, and may convert the selected broadcast signal into an intermediate frequency (IF) signal or a baseband image or a voice signal.

The tuner unit 111 may include a plurality of tuners to receive broadcast signals of the plurality of channels. Alternatively, a single tuner for simultaneously receiving broadcast signals of the plurality of channels is also possible.

The demodulator 112 may receive the digital IF signal (DIF) converted by the tuner unit 111, and may thus perform demodulation of the received signal. The demodulator 112 may perform demodulation and channel decoding, and may output a stream signal (TS). The stream signal may be a signal formed by multiplexing an image signal, a voice signal, or a data signal.

The stream signal (TS) output from the demodulator 112 may be input tio the controller 180. The controller 180 may perform demultiplexing, image/audio signal processing, etc., may output an image through the display 150, and may output a voice through the audio output unit 160.

The sensing unit 120 may sense a change in the display device 100 or may sense an external change. For example, the sensing unit 120 may include a proximity sensor, an illumination sensor, a touch sensor, an infrared (IR) sensor, an ultrasonic sensor, an optical sensor (e.g., a camera), a voice sensor (e.g., a microphone), a battery gauge, environmental sensors (e.g., hygrometer, a thermometer, etc.).

The controller 180 may check a state of the display device 100 based on information collected by the sensing unit 120, may notify the user of a problem, or may control the display device 100 to be kept in the best state.

In addition, it is possible to provide an optimal viewing environment by differently controlling the content, image quality, size, etc. of the image provided to the display module 180 depending on the viewer, ambient illuminance, etc. sensed by the sensing unit. As the smart TV has evolved, the number of functions mounted in the display device increases, and the number of the sensing units 20 also increases together with the increasing functions.

The input unit 130 may be provided at one side of a main body of the display device 100. For example, the input unit 130 may include a touch pad, a physical button, and the like. The input unit 130 may receive various user commands related to the operation of the display device 100, and may transmit a control signal corresponding to the input command to the controller 180.

Recently, as a bezel of the display device 100 decreases in size, the number of display devices 100 each including a minimum number of input unit 130 formed in a physical button exposed to the outside is rapidly increasing. Instead, a minimum number of physical buttons may be provided on the back or side surface of the display device 100. The display device may receive a user input through the remote controller 200 through a touchpad or a user input interface unit 173 to be described later.

The storage unit 140 may store a program for processing and controlling each signal used in the controller 180, and may store a signal-processed image, a voice, or a data signal. For example, the storage unit 140 may store application programs designed for the purpose of performing various tasks that can be processed by the controller 180, and may selectively provide some of the stored application programs upon request of the controller 180.

The program stored in the storage unit 140 is not specifically limited to being executed by the controller 180. The storage unit 140 may perform a function for temporarily storing an image, a voice, or a data signal received from an external device through the external device interface unit 171. The storage unit 140 may store information about a predetermined broadcast channel through a channel memory function such as a channel map.

Although the storage unit 140 of FIG. 1 is provided separately from the controller 180, the scope of the present disclosure is not limited thereto, and the storage unit 140 may also be included in the controller 180 as needed.

The storage unit 140 may include at least one of a volatile memory (e.g., DRAM, SRAM, SDRAM, etc.) and a non-volatile memory (e.g., flash memory, hard disk drive (HDD), solid state drive (SSD), etc.).

The display 150 may generate a drive signal by converting an image signal, a data signal, an OSD signal, a control signal processed by the controller 180, or by converting an image signal, a data signal, a control signal, etc. received from the interface unit 171. The display 150 may include a display panel 181 having a plurality of pixels.

A plurality of pixels included in the display panel may include RGB sub-pixels. Alternatively, a plurality of pixels included in the display panel may include sub-pixels of RGBW. The display 150 may convert the image signal, the data signal, the OSD signal, the control signal, etc. processed by the controller 180 to generate a drive signal for the plurality of pixels.

The display 150 may be implemented as a plasma display panel (PDP), a liquid crystal display (LCD), an organic light emitting diode (OLED), a flexible display, etc. In addition, the display 150 may also be implemented as a three-dimensional (3D) display. The three-dimensional (3D) display 150 may be classified into a glassless-type 3D display and a glasses-type 3D display.

The display device may include a display module that occupies most parts of the front surface, and a case that covers the back and side surfaces of the display module and packages the display module.

Recently, the display device 100 has evolved from a flat-screen display to a curved-screen display. In order to implement the curved screen, the display device 100 may use a display module 150 that can be bent or curved, such as a light emitting diode (LED) or an organic light emitting diode (OLED), etc.

Conventionally, the LCD has difficulty in self-emitting light, so that the conventional LCD has been designed to receive light through a backlight unit. The backlight unit is a device for uniformly supplying light received from a light source to a liquid crystal located on the front surface of the display device. As the backlight becomes thinner, a thin LCD can be implemented. However, it is actually difficult for the backlight unit to be implemented as a curved structure formed of a flexible material. Although the backlight unit is implemented as a curved shape, it is difficult for light to be uniformly applied to the liquid crystal, thereby changing brightness of the screen.

On the other hand, the LED or the OLED is designed in a manner that each of constituent elements constructing the pixels can self-emit light without using the backlight unit, so that the LED or the OLED can be implemented as a curved shape without any problems. In addition, since each element can perform self-emission of light, brightness of each element is not affected by a change in the positional relationship between the element and adjacent elements, so that a curved display module 150 can be implemented as an LED or OLED.

OLED (Organic Light Emitting Diode) panels appeared in earnest in mid-2010 and are rapidly replacing LCDs in the small- and medium-sized display market. The OLED is a display made using the self-emission characteristics in which OLED emits light when a current flows in a fluorescent organic compound. Since the response speed of the OLED is faster than that of the LCD, there is little afterimage when moving images are implemented.

OLEDs may be used as a light-emitting display product. In this case, the light-emitting display device may use three fluorescent organic compounds (such as red, green, and blue) each having a self-emitting function, and may use the self-emitting phenomenon in which positive(+)-charged particles and electrons injected from a cathode and anode are combined with each other within the organic material, so that a backlight unit causing degradation of color sense need not be used.

The LED panel is implemented by technology for using only one LED element as one pixel, and has a smaller LED element compared to the prior art, so that a curved display module 150 can be implemented. Whereas the conventional device referred to as an LED TV can use the LED as a light source of the backlight unit for supplying light to the LCD, it is impossible for the LED of the conventional device to constitute a screen.

The display module may include a display panel, a coupling magnet located on the rear surface of the display panel, a first power-supply unit, and a first signal module. The display panel may include a plurality of pixels (R, G, B). The plurality of pixels (R, G, B) may be formed in each region where a plurality of data lines and a plurality of gate lines cross each other. The plurality of pixels (R, G, B) may be arranged in a matrix.

For example, the plurality of pixels (R, G, B) may include a red(R) sub-pixel, a green(G) sub-pixel, and a blue(B) sub-pixel. The plurality of pixels (R, G, B) may further include white (W) sub-pixel(s).

In the display module 150, one side where an image is displayed may be referred to as a front side or a front surface. When the display module 150 displays an image, one side where no image is observed may be referred to as a rear side or a rear surface.

Meanwhile, the display 150 may be implemented as a touchscreen, so that the display 150 can also be used as an input device in addition to an output device.

The audio output unit 160 may receive a voice-processed signal from the controller 180, and may output the received signal as a voice signal.

The interface unit 170 may serve as a path of connection to various kinds of external devices connected to the display device 100. The interface unit may include not only a wired method for transmitting/receiving data through a cable, but also a wireless method using the antenna.

The interface unit 170 may include at least one of a wired/wireless headset port, an external charger port, a wired/wireless data port, a memory card port, a port connected to a device having an identification module, an audio input/output (I/O) port, a video I/O port, and an earphone port.

As an example of a wireless method, the above-described broadcast reception unit 110 may be used. The broadcast reception unit 110 may be configured to use a broadcast signal, a mobile communication short-range communication signal, a wireless Internet signal, and the like.

The external device interface unit 171 may transmit or receive data to and from a connected external device. To this end, the external device interface unit 171 may include an A/V input/output (I/O) unit (not shown).

The external device interface unit 171 may be wired or wirelessly connected to an external device such as a digital versatile disc (DVD) player, a Blu-ray player, a game console, a camera, a camcorder, a computer (laptop), a set-top box, or the like, and may perform an input/output (I/O) operation with the external device.

In addition, the external device interface unit 171 may establish a communication network with various remote controllers 200, may receive a control signal related to operation of the display device 100 from the remote controller 200, or may transmit data related to operation of the display device 100 to the remote controller 200.

The external device interface unit 171 may include a wireless communication unit (not shown) for short-range wireless communication with other electronic devices. Through the wireless communication unit (not shown), the external device interface unit 171 may exchange data with an adjacent mobile terminal. In particular, the external device interface unit 171 may receive device information, application information, an application image, and the like from the mobile terminal in a mirroring mode.

The network interface 172 may provide an interface for connecting the display device 100 to a wired/wireless network including the Internet network. For example, the network interface 172 may receive content or data provided by the Internet, a content provider, or a network administrator through a network. The network interface 172 may include a communication module (not shown) for connection with the wired/wireless network.

The external device interface unit 171 and/or the network interface 172 may include a communication module for short-range communication such as Wi-Fi, Bluetooth, Bluetooth low energy (BLE), ZigBee, Near Field Communication (NFC), and a communication module for cellular communication such as Long-Term Evolution (LTE), LTE-A (LTE Advanced), Code Division Multiple Access (CDMA), WCDMA(wideband CDMA), UMTS(universal mobile telecommunications system), WiBro(Wireless Broadband), etc.

The user input interface unit 173 may transmit user input signals to the controller 180, or may transmit signals received from the controller 180 to the user. For example, the user input interface unit 173 may transmit or receive user input signals (such as a power-on/off signal, a channel selection signal, and a screen setting signal) to and from the remote controller 200, may transmit user input signals received through a local key (not shown) such as a power key, a channel key, a volume key, and a setting key to the controller 180, may transmit a user input signal received by a sensor unit (not shown) for sensing a user gesture to the controller 180, or may transmit a signal received from the controller 180 to the sensor unit.

The controller 180 may include at least one processor, and may control the overall operation of the display device 100 using the processor included therein. Here, the processor may be a general processor such as a CPU. Of course, the processor may be a dedicated device such as an ASIC, or other hardware-based processor.

The controller 180 may demultiplex the stream received through the tuner unit 111, the demodulator 112, the external device interface unit 171, or the network interface 172, and may process the demultiplexed signals to generate and output a signal for image or voice output.

The image signal processed by the controller 180 may be input to the display 150 and displayed as an image corresponding to the corresponding image signal. In addition, the image signal processed by the controller 180 may be input to the external output device through the external device interface unit 171.

The voice (or audio) signal processed by the controller 180 may be audibly output to the audio output unit 160. In addition, the voice signal processed by the controller 180 may be input to the external output device through the external device interface unit 171.

In addition, the controller 180 may control the overall operation of the display device 100. For example, the controller 180 may control the tuner unit 111 to select a broadcast program corresponding to either a user-selected channel or a prestored channel.

In addition, the controller 180 may control the display device 100 by a user command or an internal program received through the user input interface unit 173. The controller 180 may control the display 150 to display an image. In this case, the image displayed on the display 150 may be a still image or a moving image, and may be a 2D image or a 3D image.

On the other hand, the controller 180 may display a predetermined 2D object in the image displayed on the display 150. For example, the object may be at least one of a connected web screen (newspaper, magazine, etc.), electronic program guide (EPG), various menus, widgets, icons, still images, moving images, and text.

Meanwhile, the controller 180 may modulate and/or demodulate the signal using an amplitude shift keying (ASK) scheme. Here, the ASK scheme may refer to a method for modulating a signal by differentiating the amplitude of a carrier wave according to data values or for restoring an analog signal to a digital data value according to the amplitude of the carrier wave.

For example, the controller 180 may modulate an image signal using the ASK scheme, and may transmit the modulated signal through a wireless communication module.

For example, the controller 180 may demodulate and process the image signal received through the wireless communication module using the ASK scheme.

Accordingly, the display device 100 may simply transmit and receive signals to and from other image display devices arranged adjacent to each other without using either a unique identifier such as a Media Access Control (MAC) address or a complex communication protocol such as TCP/IP.

On the other hand, the display device 100 may further include a photographing unit (not shown). The photographing unit may photograph a user. The photographing unit may be implemented as one camera, but is not limited thereto, and may be implemented by a plurality of cameras. On the other hand, the photographing unit may be embedded in the display device 100 or may be separately arranged on the display 150. The image information photographed by the photographing unit may be input to the controller 180.

The controller 180 may recognize the position of the user based on the image photographed by the photographing unit. For example, the controller 180 may recognize a distance (z-axis coordinates) between the user and the display device 100. In addition, the controller 180 may recognize the X-axis coordinate and the Y-axis coordinate within the display 150 corresponding to the user position.

The controller 180 may sense a user gesture based on an image photographed by the photographing unit, each of signals detected by the sensor unit, or a combination thereof.

The power-supply unit 190 may supply corresponding power to the display device 100. In particular, the controller 180 may be implemented as a System on Chip (SoC), a display 150 for displaying an image, and an audio output unit 160 for audio output.

Specifically, the power-supply unit 190 may include a converter (not shown) for converting AC power into DC power, and a DC/DC converter (not shown) for converting the level of DC power.

On the other hand, the power-supply unit 190 may receive power from the external power source, and may distribute the received power to the respective components. The power-supply unit 190 may be directly connected to the external power source to supply AC power, and may include a battery capable of being charged with electricity.

In the former case, the power-supply unit 190 may be used by connecting to a wired cable, and it is difficult for the power-supply unit 190 to move from one place to another place, and the movement range of the power-supply unit 190 is limited. In the latter case, the power-supply unit 190 can move from one place to another place, but the weight and volume of the power-supply unit 190 may increase as much as the weight and volume of the battery. In addition, for charging, the power-supply unit 190 should be directly connected to a power cable for a predetermined period of time or should be coupled to a charging cradle (not shown) for power supply.

The charging cradle may be connected to the display device through a terminal exposed to the outside. Alternatively, if the power-supply unit 190 approaches the charging cradle using a wireless interface, a built-in battery of the power-supply unit 190 may also be charged with electricity.

The remote controller 200 may transmit a user input to the user input interface unit 173. To this end, the remote controller 200 may use Bluetooth, Radio Frequency (RF) communication, infrared (IR) communication, Ultra-Wideband (UWB), ZigBee, or the like. In addition, the remote controller 200 may receive the image, voice, or data signal output from the user input interface unit 173, and may display or audibly output the received image, voice, or data signal.

On the other hand, the above-described display device 100 may be a fixed or mobile digital broadcast receiver capable of receiving digital broadcast signals.

Meanwhile, the block diagram of the display device 100 shown in FIG. 1 is disclosed for only for illustrative purposes for one embodiment of the present disclosure, and the respective components of the display device 100 shown in FIG. 1 can be integrated, added or omitted according to the specifications of the digital device 100 which is actually implemented.

That is, if necessary, two or more components may be combined into one component, or one component may be subdivided into two or more components. In addition, the functions performed in each block are intended to explain the embodiment of the present disclosure, and the specific operation or device does not limit the scope of the present disclosure.

In particular, a detailed description will be given of a product invention implementing the embodiment and the other embodiment of the present disclosure described above using the display device shown in FIG. 9.

First, a description will be given of the embodiment of the present disclosure with reference to FIGs. 2 to 4 and FIG. 9.

The display device 100 illustrated in FIG. 9 is controlled by the remote controller 200. Furthermore, the display device 100 includes the network interface 172, the display 150, and the controller 180.

The network interface 172 performs a scan operation to recognize whether at least one external device is present nearby, and receives device information from the at least one external device.

The display 150 displays an option for changing a custom code of the remote controller 200. The displayed option is illustrated in FIG. 4.

Then, the controller 180 sets the changed custom code according to selection of the option. Furthermore, the controller 180 is characterized by controlling the network interface 172 to transmit the changed custom code to the remote controller 200.

Meanwhile, the other embodiment of the present disclosure will be described with reference to FIGs. 5 to 8 and FIG. 9.

The display device 100 illustrated in FIG. 9 is controlled by the remote controller 200. Furthermore, the display device 100 includes the network interface 172, the display 150, and the controller 180.

The display 150 displays an option for activating multi-remote control automatic setting, which has been illustrated above with reference to FIG. 8.

The network interface 172 is designed to receive device information from at least one external device connected to the same network when the option is selected. The device information here includes, for example, at least a custom IR code value, etc.

The controller 180 is characterized by controlling the network interface 172 so that a changed custom code is transmitted to an external device of a specific group having the same custom code as that of the display device 100 according to the received device information.

The above exemplary embodiments are therefore to be construed in all aspects as illustrative and not restrictive. The scope of the invention is determined by the appended claims.

## Claims

1. A method of controlling a display device (100) controlled by a remote controller (200), the method comprising:
displaying an option for activating multi-remote control automatic setting;
receiving device information from at least one external device connected to the same network when the option is selected; and
transmitting a changed custom code to an external device of a specific group having the same custom code as a custom code of the display device (100) according to the received device information.

2. The method according to claim 1, wherein custom codes of respective external devices belonging to the specific group are all different from each other.

3. The method according to claim 2, wherein the display device (100) has a MAC address lower than a MAC address of the at least one external device connected to the same network.

4. A display device (100) controlled by a remote controller (200), the display device (100) comprising:
a display configured to display an option for activating multi-remote control automatic setting;
a network interface (172) configured to receive device information from at least one external device connected to the same network when the option is selected; and
a controller,
wherein the controller controls the network interface (172) so that a changed custom code is transmitted to an external device of a specific group having the same custom code as a custom code of the display device (100) according to the received device information.

5. The display device (100) according to claim 4, wherein custom codes of respective external devices belonging to the specific group are all different from each other.

6. The display device (100) according to claim 4, wherein the display device (100) has a MAC address lower than a MAC address of the at least one external device connected to the same network.

## Patentansprüche

1. Verfahren zum Steuern einer Anzeigevorrichtung (100), die durch eine Fernsteuerung (200) gesteuert wird, wobei das Verfahren aufweist:
Anzeigen einer Option zum Aktivieren einer automatischen Einstellung der Mehrfach-Fernsteuerung;
Empfangen von Geräteinformationen von mindestens einer externen Vorrichtung, die mit demselben Netzwerk verbunden ist, wenn die Option ausgewählt wird; und
Übertragen eines geänderten benutzerdefinierten Codes an eine externe Vorrichtung einer bestimmten Gruppe, die denselben benutzerdefinierten Code wie einen benutzerdefinierten Code der Anzeigevorrichtung (100) aufweist, gemäß den empfangenen Geräteinformationen.

2. Verfahren nach Anspruch 1, wobei die benutzerdefinierten Codes der jeweiligen externen Vorrichtungen, die zu der bestimmten Gruppe gehören, alle voneinander verschieden sind.

3. Verfahren nach Anspruch 2, wobei die Anzeigevorrichtung (100) eine MAC-Adresse aufweist, die niedriger ist als eine MAC-Adresse der mindestens einen externen Vorrichtung, die mit demselben Netzwerk verbunden ist.

4. Anzeigevorrichtung (100), die durch eine Fernsteuerung (200) gesteuert wird, wobei die Anzeigevorrichtung (100) aufweist:
eine Anzeige, die dazu konfiguriert ist, eine Option zum Aktivieren einer automatischen Einstellung der Mehrfach-Fernsteuerung anzuzeigen;
eine Netzwerkschnittstelle (172), die dazu konfiguriert ist, Geräteinformationen von mindestens einer externen Vorrichtung, die mit demselben Netzwerk verbunden ist, zu empfangen, wenn die Option ausgewählt wird; und
eine Steuereinheit,
wobei die Steuereinheit die Netzwerkschnittstelle (172) so steuert, dass ein geänderter benutzerdefinierter Code gemäß den empfangenen Geräteinformationen an eine externe Vorrichtung einer bestimmten Gruppe, die denselben benutzerdefinierten Code wie ein benutzerdefinierter Code der Anzeigevorrichtung (100) aufweist, übertragen wird.

5. Anzeigevorrichtung (100) nach Anspruch 4, wobei die benutzerdefinierten Codes der jeweiligen externen Vorrichtungen, die zu der bestimmten Gruppe gehören, alle voneinander verschieden sind.

6. Anzeigevorrichtung (100) nach Anspruch 4, wobei die Anzeigevorrichtung (100) eine MAC-Adresse aufweist, die niedriger ist als eine MAC-Adresse der mindestens einen externen Vorrichtung, die mit demselben Netzwerk verbunden ist.

## Revendications

1. Procédé de commande d'un dispositif d'affichage (100) commandé par un dispositif de commande à distance (200), le procédé comprenant :
l'affichage d'une option pour activer un réglage automatique de la commande à distance multiple ;
la réception d'informations de dispositif provenant d'au moins un dispositif externe connecté au même réseau lorsque l'option est sélectionnée ; et
la transmission d'un code personnalisé modifié à un dispositif externe d'un groupe spécifique ayant le même code personnalisé qu'un code personnalisé du dispositif d'affichage (100), selon les informations de dispositif reçues.

2. Procédé selon la revendication 1, dans lequel les codes personnalisés des dispositifs externes respectifs appartenant au groupe spécifique sont tous différents les uns des autres.

3. Procédé selon la revendication 2, dans lequel le dispositif d'affichage (100) présente une adresse MAC inférieure à une adresse MAC dudit au moins un dispositif externe connecté au même réseau.

4. Dispositif d'affichage (100) commandé par un dispositif de commande à distance (200), le dispositif d'affichage (100) comprenant :
un afficheur configuré pour afficher une option pour activer un réglage automatique de la commande à distance multiple ;
une interface réseau (172) configurée pour recevoir des informations de dispositif provenant d'au moins un dispositif externe connecté au même réseau lorsque l'option est sélectionnée ; et
une unité de commande,
dans lequel l'unité de commande commande l'interface réseau (172) de sorte qu'un code personnalisé modifié soit transmis selon les informations de dispositif reçues à un dispositif externe d'un groupe spécifique ayant le même code personnalisé qu'un code personnalisé du dispositif d'affichage (100).,

5. Dispositif d'affichage (100) selon la revendication 4, dans lequel les codes personnalisés des dispositifs externes respectifs appartenant au groupe spécifique sont tous différents les uns des autres.

6. Dispositif d'affichage (100) selon la revendication 4, dans lequel le dispositif d'affichage (100) présente une adresse MAC inférieure à une adresse MAC dudit au moins un dispositif externe connecté au même réseau.
